# EUROPÄISCHE PATENTANMELDUNG

(11) **EP 1 431 794 A1**
(43) Veröffentlichungstag der Anmeldung: **23.06.2004**
(21) Anmeldenummer: 03021889.5
(22) Anmeldetag: 27.09.2003
(51) Int. Cl.: G02B 7/04, G02B 7/08, G02B 7/10

(54) **Motorfokus für Spektive**

(30) Priorität: 20.12.2002 DE 10259929; 25.03.2003 DE 10313184
(71) Anmelder: Hensoldt AG, 35576 Wetzlar (DE)
(72) Erfinder: Luthardt, Dirk, 35581 Wetzlar (DE); Bartzke, Karlheinz, Dr., 99867 Gotha (DE)
(74) Vertreter: Gnatzig, Klaus

(57) **Zusammenfassung**

Fernglas mit einer durch die optischen Elemente des Fernglases festgelegten optischen Achse und mindestens einer entlang der optischen Achse verschiebbar gelagerten Linse, wobei ein motorischer Antrieb (20) für den Antrieb der mindestens einen verschiebbar gelagerten Linse( 31) vorgesehen ist.

## Beschreibung

Die Erfindung betrifft ein Fernglas gemäß dem Oberbegriff des Patentanspruchs 1.

Aus der EP 589 177 B1 ist ein monokulares Femrohr konstanter Länge mit einem in einem Tubus angeordneten Objektiv, einem auswechselbaren oder variablen Okular zur Veränderung der Vergrößerung bekannt. Dieses Fernrohr ist mit einem Stellglied versehen, mittels dessen eine im Tubus verschiebbar gelagerte Fokussiereinheit entlang der optischen Achse verschoben werden kann. Dieses monokulare Fernrohr umfasst ein Stellglied, dass als Übersetzungsgetriebe mit mehreren verschiedenen, je nach benutzter Vergrößerung, wählbaren Übersetzungen ausgebildet ist. Mittels dieses Stellgliedes kann die Stellgeschwindigkeit der Fokussiereinheit an die gewählte Vergrößerung angepasst werden.

Aus der DE 1 243 405 ist ein geodätisches Zielfernrohr bekannt, bei dem ein Verstellmechanismus zur Scharfstellung eines Bildes an die optischen Abbildungsgesetze angepasst wurde. Infolgedessen erfolgt die Stellgeschwindigkeit der Fokussierlinse nicht linear zur Betätigung des für die Fokussierung vorgesehenen Betätigungselementes.

Ein Teleskop mit einer Feineinstellmutter ist weiterhin aus der DE 1 109 398 AS bekannt. Aus der US 4,632,547 ist ein Richtteleskop bekannt, dass mit einem Schaltgetriebe versehen ist, so dass die Fokussierlinse wahlweise langsam und feinfühlig oder schnell verschoben werden kann.

Dieser Erfindung liegt die Aufgabe zugrunde, ein komfortabel bedienbares Fernglas, insbesondere Monokular, bereitzustellen.

Durch die Maßnahme das erfindungsgemäße Fernglas mit einem motorischen Antrieb zu versehen, durch den mindestens eine entlang der optischen Achse verschiebbar gelagerte Linse angetrieben werden kann, wird ein komfortabel bedienbares Fernglas bereitgestellt.

Dieser motorische Antrieb kann sowohl für den Antrieb einer Fokussiereinheit als auch für den Antrieb einer einstellbaren veränderbaren Vergrößerung des Fernrohres vorgesehen sein. Ein Unschalten zwischen den anzutreibenden Linsen bzw. Linsengruppen kann mittels einer Kupplung vorgenommen werden.

Es kann vorgesehen sein, dass eine Fokussierung automatisiert durchgeführt wird, so dass beispielsweise das Fernglas auf einen in der Mitte des Bildfeldes erscheinenden Gegenstandes fokussiert wird.

Es hat sich als vorteilhaft herausgestellt, dem motorischen Antrieb ein Bedienelement zu dessen Steuerung zuzuordnen, so dass gemäß dem Wille des Benutzers eine Verstellung der Vergrößerung oder Fokussierung durch Betätigung dieses Bedienelementes vorgenommen werden kann.

Es hat sich als vorteilhaft herausgestellt, als Bedienelement ein Bedienelement vorzusehen, dass in zwei Richtungen betätigt werden kann. Durch Betätigung in eine erste Richtung wird die mindestens eine mittels dieses Antriebes verstellbare Linse in eine erste Richtung angetrieben und bei Betätigung in entgegengesetzter Richtung entsprechend in die entgegengesetzte Richtung angetrieben.

Weiterhin hat sich als vorteilhaft herausgestellt, ein Bedienelement vorzusehen, das mehrere diskrete Betätigungsstellungen aufweist. Dadurch ist es möglich, diesen diskreten Betätigungsstellungen verschiedene Antriebsgeschwindigkeiten zuzuordnen.

Weiterhin hat es sich als vorteilhaft herausgestellt ein Bedienelement vorzusehen, dass stufenlos betätigt werden kann, so dass stufenlos die Antriebsgeschwindigkeit durch entsprechende Betätigung des Bedienelementes gewählt werden kann.

Es hat sich weiterhin als vorteilhaft herausgestellt, das Betätigungselement mit einem Sensor zu versehen. Dadurch ist es möglich, den motorischen Antrieb in Abhängigkeit von der sensierten Betätigungsstellung des Bedienelementes anzusteuern.

Weiterhin hat sich als vorteilhaft herausgestellt, eine Steuereinrichtung vorzusehen, der die Signale des Sensors zugeführt werden. In Abhängigkeit von den zugeführten Signalen wird durch die Steuereinrichtung der motorische Antrieb angesteuert. Dabei wird die gewünschte Geschwindigkeit und Richtung berücksichtigt.

Durch die Verwendung des mindestens einen Sensors können Signalleitungen, insbesondere elektrische Signale leitende Verbindungen, eingesetzt werden, die im Vergleich zu einer mechanischen Übermittlung, platzsparend angeordnet werden können. Damit kann der Bauraum besser ausgenutzt werden. Die Anordnung der Steuereinrichtung ist flexibel wählbar. Signalverbindungen lassen sich sehr flexibel vorsehen und sind sehr platzsparend.

Als vorteilhafte Ausgestaltung des Bedienelementes hat es sich herausgestellt, als Bedienelement einen Kippschalter, Kipptaster oder Wipptaster vorzusehen. In Abhängigkeit von dem Maß der Auslenkung dieses Kippschalters kann eine Steuerung der Antriebsgeschwindigkeit vorgesehen werden.

Es hat sich als vorteilhaft herausgestellt, dass die entlang der optischen Achse verschiebbar gelagerte Linse zwischen Okular und Objektiv angeordnet ist. Damit können weiterhin Standardokulare und Objektive auch bei einem derartigen Fernglas mit motorischem Antrieb ohne Modifikation eingesetzt werden. Diese Standartokulare und Objektive sind oftmals austauschbar.

Weiter vorteilhafte Maßnahmen sind in weiteren Unteransprüchen beschrieben.

Anhand der folgenden Ausführungsbeispielen wird die Erfindung näher beschrieben. Es zeigt:
- Figur 1: monokulares Fernglas,
- Figur 2: Schnitt durch ein Fernglas mit motorischem Antrieb für den Antrieb einer axial verschiebbaren Linse,
- Figur 3: Skizze eines Fernglases mit Bedienelement mit Sensor und Notbetätigung,
- Figur 4: Darstellung des Umschaltmechanismus zwischen dem motorischen Antrieb und der Notbetätigung,
- Figur 5: Seitenansicht des in Figur 4 dargestellten Umschaltmechanismusses
- Figur 6: Seitenansicht eines Fernglases mit Linearmotor als Antrieb
- Figur 7: Sensor mit Indikatorscheibe
- Figur 8: Darstellung der Empfindlichkeit des Betätigungselementes

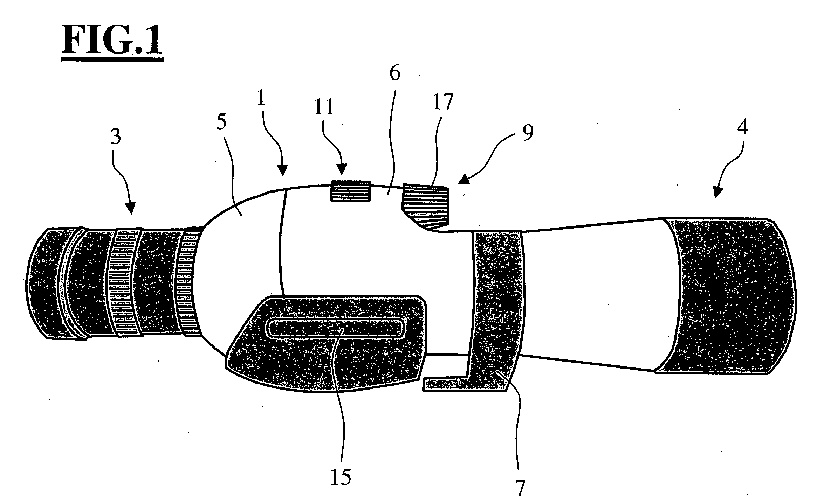

Anhand von Figur 1 wird zunächst der prinzipielle Aufbau eines monokularen Fernglases, auch mit Spektiv oder Beobachtungsfernrohr bezeichnet, beschrieben. Diese Spektiv umfasst einen motorischen Antrieb zum Antrieb einer entlang der optischen Achse verschiebbar gelagerten Linse. Weiterhin umfasst das Spektiv ein Objektiv 4 und ein Okular 3. Das Okular 3 kann austauschbar sein. Es kann auch ein Variookular als Okular vorgesehen sein. Zwischen Objektiv 4 und Okular 3 ist ein mittleres Gehäuseteil 6 und ein vorderes Gehäuseteil 5 angeordnet. Das mittlere Gehäuseteil 6 ist mit einer Stativbefestigung 7 versehen. An der Unterseite des Spektivs ist ein Griffbereich ausgebildet, der Griffmulden 15 umfasst. Auf der dem Griffbereich gegenüberliegenden Seite, also auf der in Benutzung dem Horizont zugewandten Seite des Spektivs 1 ist ein Bedienelement 11 und ein Drehknopf 17 angeordnet. Das Bedienelement 11 ist einem in Figur 1 nicht dargestellten motorischen Antrieb 20 zugeordnet. Der Drehknopf 17 ist Bestandteil des als Notbetätigung 9 bezeichneten manuellen Antriebs . Die im folgenden anhand der beschriebenen Ausführungsbeispiele erläuterte Erfindung, kann insbesondere auch bei binokularen Fernrohren eingesetzt werden.

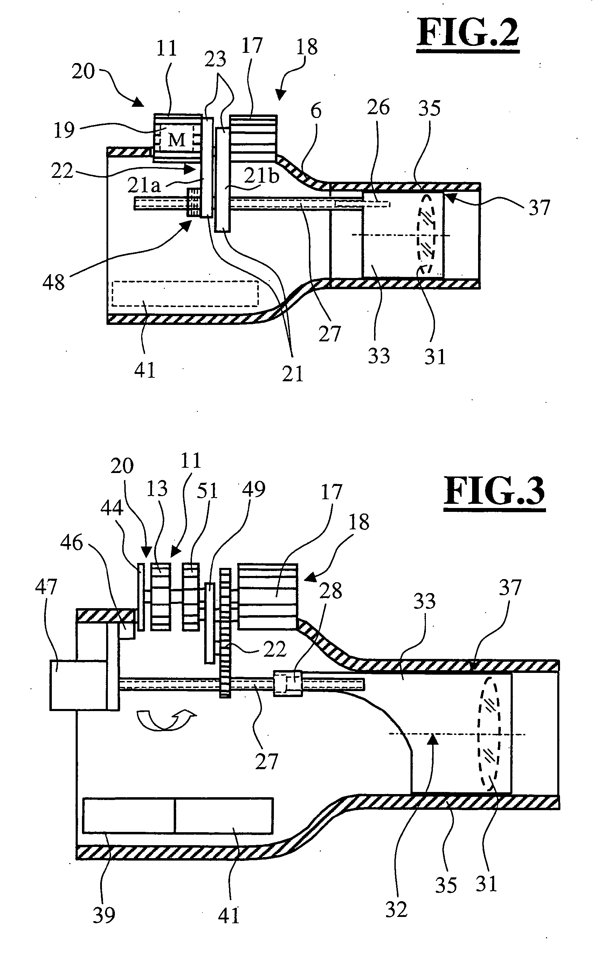

Anhand von Figur 2 wird der nähere Aufbau in Bezug auf den motorischen Antrieb 20 und die Notbetätigung 18 detaillierter beschrieben. In dem mittleren Gehäuseteil 6 ist eine Spindel 27 angeordnet, deren Gewinde als Außengewinde ausgebildet ist. Diese Spindel 27 ist über einen Stab fest mit einer Fassung 33 verbunden. Diese Fassung 33 ist mittels einer Axialführung 37 axial entlang der optischen Achse des Spektivs verschiebbar gelagert. Mit der Spindel steht eine Mutter 48 in Eingriff, die axial fest aber drehbar im mittleren Gehäuseteil gelagert ist. Diese Mutter 48 kann rotatorisch über eine Getriebestufe 21, hier mit Zahnriemen 23, angetrieben werden.

Es ist jedoch auch möglich eine Spindel mit einem Innengewinde einzusetzen, die dann mit einem Stab mit Außengewinde in Eingriff steht. Der Stab ist dann fest mit der Fassung 33 verbunden, wobei die Fassung 33 wiederum drehfest und axial verschiebbar gelagert ist. Die Spindel ist axial fest und drehbar gelagert. Damit resultiert aus einem Drehantrieb der Spindel eine Tranlationsbewegung der Fassung 33.

Mit dem Gewinde der Spindel 27 steht ein Gewindestab 26 in Eingriff. Dieser Gewindestab 26 ist mit einer Fassung 33 fest verbunden. Die Fassung 33 ist mittels einer Axialführung 37 in axialer Richtung, das heißt entlang der optischen Achse des Spektivs 1 axial verschiebbar gelagert. In dieser Fassung 33 ist eine Linse 31, die somit axial verschiebbar gelagert ist, angeordnet. In dem gezeigten Ausführungsbeispiel ist exemplarisch nur eine Linse eingezeichnet worden, es könnte jedoch auch eine Linsengruppe bestehend aus einer Mehrzahl von Linsen mittels der Fassung axial verschiebbar gelagert sein.

Die Fassung 33 ist in einem Tubus 35 über eine Längsverzahnung oder anderweitigen Führungselementen axial verschiebbar gelagert. Zum Antrieb der Spindel ist ein Motor 19 vorgesehen der über ein Getriebe 22 mit der Spindel in Wirkverbindung steht. In diesem Ausführungsbeispiel ist der Motor 19 innerhalb des Bedienelementes 11 angeordnet. Zur Energieversorgung des Motors 19 sind Batterien bzw. ein Akku 41 im unteren Bereich im mittleren Gehäuseteil 6 angeordnet. Zum Wiederaufladen des Akkus 41 kann die notwendige Energie mittels einer am Gehäuse 5,6 angeordneten Solarfläche bereitgestellt werden.

Der Drehknopf 17 des manuellen Antriebs 18 steht mit der Spindel 27 über das Getriebe 22, das eine weitere Getriebestufe 21 b umfasst, in Wirkverbindung. Diese Notbetätigung 9 bzw. dieser manuelle Antrieb ist für den Fall vorgesehen, dass der motorische Antrieb 20 nicht funktionsfähig ist oder ungeeignet ist aufgrund des mit dem motorischen Antrieb verbundenen Geräusches. Die beiden Übersetzungsstufen 21a und 21b sind mit unterschiedlichen Übersetzungsverhältnissen ausgebildet. Für die Aktivierung der Notbetätigung 18 ist der Drehknopf in Richtung Objektives 4 herauszuziehen, wodurch eine vorgesehene Kupplung 49 geschlossen wird. Dadurch wird die über den Drehknopf 17 eingeleitete Bewegung über die Getriebestufe 21 b auf die Spindel 27 übertragen wird.

Derartige Umschaltsysteme wie die Kupplung 49 und die noch im folgenden dargestellten Systeme können auch für eine Umschaltung zwischen Antrieb einer wählbaren Vergrößerung und Antrieb einer Fokussierung vorgesehen werden, wobei der Motor entweder mit der Fokussierlinse oder der verschiebbaren Linse zur Einstellung der gewünschten Vergrößerung in Wirkverbindung steht.

In einer vereinfachten Ausführungsform kann auch auf die Kupplung verzichtet werden. Bei einer derartigen Ausführung ist mit einem Antrieb vom Bedienelement 11 grundsätzlich auch eine Bewegung des Drehknopfes 17 verbunden.

In einer vereinfachten Ausführungsform kann auf die Notbetätigung verzichtet werden, so dass bei Ausfall des Motors ein Antrieb der axial verschiebbaren Linse nicht möglich ist Anhand von Figur 3 wird eine weitere Ausführungsvariante eines Fernglases bzw. Spektives, das einen motorischen Antrieb 20 und eine Notbetätigung 18 umfasst, näher beschrieben.

Bei diesem Ausführungsbeispiel ist das Bedienelement 11 als Kippschalter 13 ausgebildet. Diesem Kippschalter 13 ist ein Sensor zugeordnet, durch den die Auslenkung des Kippschalters 13 detektiert wird. Dieser Sensor 45 umfasst eine Sensorscheibe 44 die mit dem Kippschalter 13 fest verbunden ist. Die Auslenkung der Sensorscheibe 44 wird von einem Detektor 46 detektiert. Die Signale des Detektors 46 werden einer Steuereinrichtung 39 zugeführt. Durch die Steuereinheit wird in Abhängigkeit von den Signalen ein direkt mit der Spindel 27 verbundener Schrittmotor zum Antrieb der Spindel angesteuert. Die Signalverbindungen sind in Fig. 3 aus Übersichtlichkeitsgründen nicht dargestellt.

Wiederum ist im unteren Bereich des mittleren Gehäuseteils 6 die Energieversorgung 41 angeordnet. In diesem Bereich ist auch die Steuereinrichtung 39 angeordnet. Aufgrund der Möglichkeit Signalverbindungen flexibel anordnen zu können, ist es jedoch möglich die Steuereinrichtung an einem anderen zuvor noch nicht ausgefüllten Ort im Spektiv anzuordnen. Somit können bereits vorhandene Bauräume optimal ausgenutzt werden.

Die Anordnung der Batterien in dem unteren Gehäusebereich trägt zu einer für das Handling vorteilhaften Gewichtsverteilung, die möglichst ausgewogen sein sollte, bei.

Bei diesem Ausführungsbeispiel weist die Spindel 27 ein Außengewinde auf, dass mit einer Mutter 28 in Eingriff steht. Die Mutter ist fest mit der Fassung 33 verbunden, die durch eine Axialführung 37 in Form einer Längsverzahnung oder andersartiger Axialführung in dem Tubus 35 axial verschiebbar gelagert ist. Aus einem rotatorischen Antrieb der Spindel 27 resultiert aufgrund der mit der Spindel in Eingriff befindliche axial fest gelagerten Mutter eine Axialbewegung der Fassung 33 entlang der optischen Achse 32. Exemplarisch ist wiederum eine Linse 31, die mittels der Fassung 33 gelagert ist, dargestellt.

Im folgenden wird auf Ausführungsvarianten des vorgesehenen Kippschalters 13 eingegangen. Alle im folgenden näher diskutierten Varianten eines Kippschalters, stellen sich bei Reduzierung einer von außen auf den Kippschalter wirkenden Kraft automatisch in eine Ruheposition zurück. Ausgehend von dieser Ruheposition kann der Kippschalter 13 in eine erste Richtung ausgelenkt werden, die den Motor 19 zum Antrieb der Spindel in eine erste Drehrichtung antreibt. Wird der Kippschalter in die entgegengesetzte Richtung ausgelenkt, so wird der Motor 19 zum Antrieb der Spindel 27 in die entgegengesetzte Richtung angesteuert.

Bei einer ersten Ausführung eines Kippschalters 13 ist vorgesehen, dass dieser Kippschalter 13 mehrere diskrete Betätigungspositionen aufweist. Dem Benutzer werden diese Betätigungspositionen signalisiert, indem der Benutzer beim Wechsel von einer ersten Betätigungsposition in eine benachbarte Betätigungsposition einen Widerstand überwinden muss. Bei Beendigung der Betätigung kehrt der Kippschalter 13 automatisch in die Ruheposition zurück. Diesen diskreten Betätigungspositionen sind vorbestimmte Antriebsgeschwindigkeiten, dass heißt konkret Solldrehzahlen des Motors 19, zugeordnet. Je weiter der Auslenkwinkel des Betätigungselementes ist, desto schneller wird die axial verschiebbar gelagerte Linse angetrieben. Damit ist die Antriebsgeschwindigkeit stufenweise einstellbar. Diese Abstufung ist vorzugsweise so ausgestaltet, dass bei geringen Auslenkungen des Kippschalters den benachbarten Betätigungsstellungen bei Betrachtung der Absolutgeschwindigkeiten nur eine geringfügige Änderung der Antriebsgeschwindigkeit verbunden ist.

Weiterhin kann ein Kippschalter vorgesehen sein, der stufenlos in eine erste Richtung und in eine entgegengesetzte Richtung ausgelenkt werden kann. Die jeweilige Auslenkung des Kippschalters 13 wird mittels eines Sensors detektiert und der Steuereinrichtung 39 zugeführt. Über diese Steuereinrichtung 39 wird der Motor in Abhängigkeit von dem Maß der detektierten Auslenkung angesteuert, wobei die Antriebsgeschwindigkeit des Motors mit zunehmender Auslenkung des Kippschalters sich stufenlos erhöht. Es kann auch vorgesehen sein, dass durch die Steuereinrichtung eine stufenweise Erhöhung der Drehgeschwindigkeit des Motors 19 angesteuert wird. In Abhängigkeit von der Richtung der Auslenkung des Kippschalters 13 wird der Motor zum Antrieb in eine erste oder zweite Drehrichtung angesteuert.

Auch die in Figur 3 dargestellte Ausführungsvariante ist mit einer Notbetätigung 18 ausgestattet. Mittels einer Schaltkupplung kann der motorische Antrieb 20 mit dem Motor 47 auf manuellen Antrieb mittels der Notbetätigung 18 durch Drehen des Drehknopfes 17 umgeschaltet werden. Zum Umschalten ist ein Schaltelement 51 vorgesehen. Ist durch Umschaltung des Schaltelementes 51 die Notbetätigung aktiviert, so steht ein mit dem Drehelement 17 fest verbundenes Abtriebsrad über ein Getriebe 22 mit der Spindel 27 in Wirkverbindung. Demzufolge resultiert aus einer Rotation des Drehelementes 17 eine Drehbewegung der Spindel 27. Als Getriebe 22 sind insbesondere Zahnriemengetriebe wie in Fig. 2 dargestellt, CVT Getriebe mit Riemen und Getriebe umfassend ineinander greifende Zahnräder, siehe Fig. 3, geeignet.

Durch die Kupplung 49 wird auch gewährleistet, dass bei motorischem Antrieb der Drehknopf 17 nicht mitdreht. Weiterhin wird im Fall einer Notbetätigung durch Abkopplung des motorischen Antriebes, da der Motor nicht mitgedreht werden muss, die für die Notbetätigung erforderliche Kraft, reduziert.
Der Kraftfluss kann mittels einer Schaltkupplung unterbrochen werden. Hierfür sind hinreichend Beispiele aus der Literatur, beispielsweise aus Konstruktionselemente der Feinmechanik, Kapitel 11.4.2, 2. Auflage, erschienen im Hansa Verlag, Autoren Werner Krause oder Grundlagen der Konstruktion, 7. Auflage, erschienen im Hansa Verlag, von Werner Krause Seite 218- 219, bekannt. Desweiteren kann bei dem motorischen Antrieb die Antriebskette ( Rotorachse des Motors, Flansch, Spindel, Spindelmutter) unterbrochen sein und durch ein zusätzliches Übertragungselement ergänzt werden. Dieses zusätzliche Übertragungselement ist so gestaltet, dass gegebenenfalls eine kraft- bzw. formschlüssige Verbindung zwischen den anderen Übertragungsgliedern entsteht. Durch Ein- und Ausschwenken des zusätzlichen Übertragungselementes wird die Abtriebskette unterbrochen und somit der motorische Antrieb entkoppelt. Grundsätzlich ist dies jedoch auch im Wirkprinzip eine Schaltkupplung.

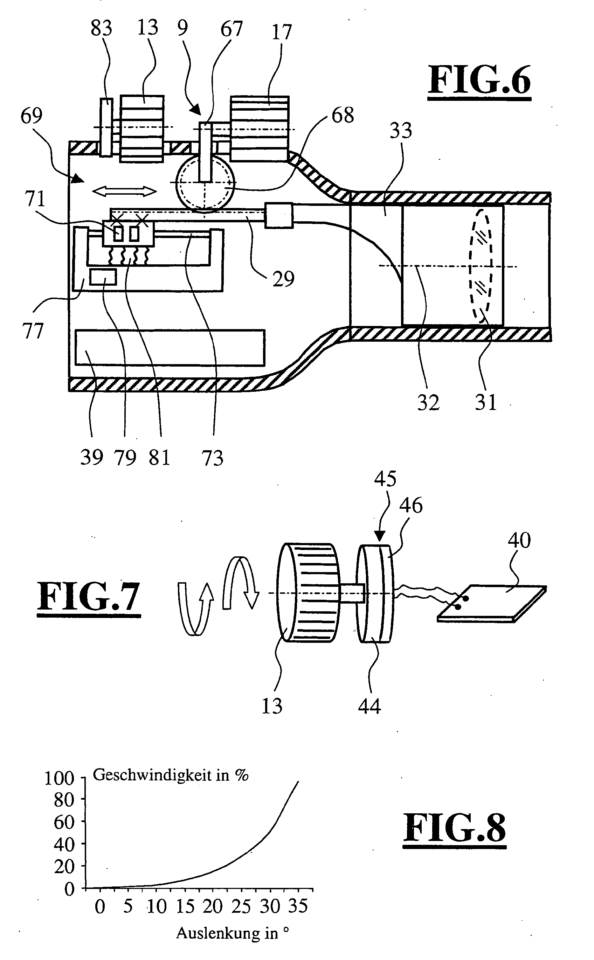

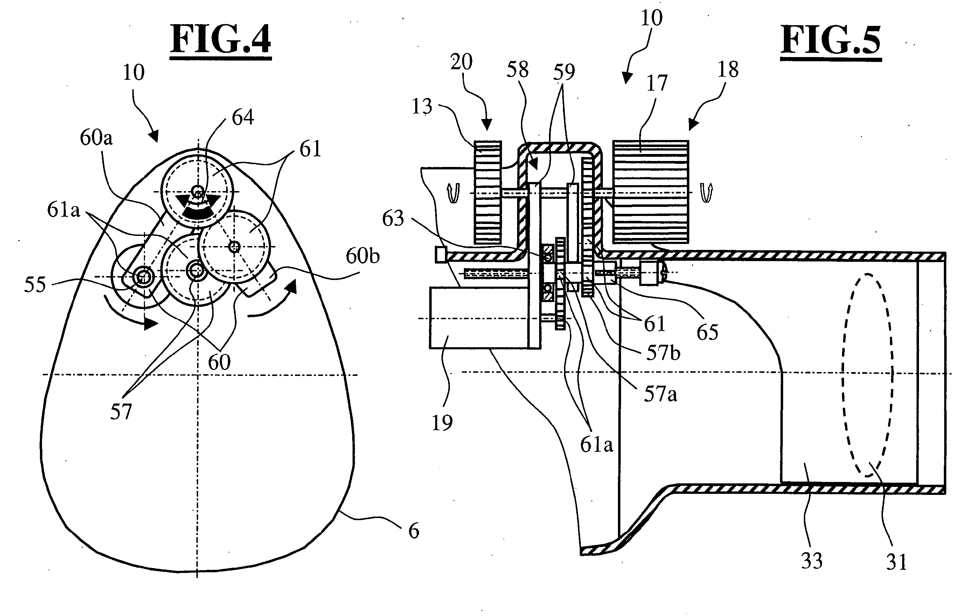

In Figur 6 ist ein Ausführungsbeispiel gezeigt, bei dem der motorische Antrieb 20 einen Linearantrieb 69 umfasst. Dieser Linearantrieb weist einen Läufer 71 auf. Dieser Läufer umfasst Elektromagnete 75. Dieser Läufer 71 wird durch eine Läuferführung 73 geführt und ist mit der Zahnstange 29 fest verbunden. Weiterhin umfasst der Linearantrieb 69 einen Stator 77 der Dauermagnete 79 umfasst. Der Linearmotor 69 steht mit einer Zahnstange 29 in Wirkverbindung. Durch Ansteuerung des Linearantriebes 69 wird die Zahnstange 29 in axialer Richtung verschoben. Diese Zahnstange 29 ist fest mit der Fassung 33 verbunden, die zur Lagerung der axial verschiebbaren Linsen 31 dient. Als Bedienelement 11 ist wiederum ein Kippschalter 13 vorgesehen, dessen Betätigungsstellung durch einen Sensor 83 detektiert wird. Diese Signale des Sensors 83 werden der Steuereinrichtung 39 zugeleitet. In Abhängigkeit von diesen Signalen steuert die Steuereinrichtung 39 den Linearmotor an, woraus eine Bewegung der Linse in axialer Richtung entlang der optischen Achse 32 resultieut.

Auch dieses Ausführungsbeispiel ist mit einer Notbetätigung versehen, so dass zum einen in Abhängigkeit von der Gebrauchssituation und zum anderen bei einem Defekt des motorischen Antriebs, die Möglichkeit besteht die Linse 31 entlang der optischen Achse durch manuelle Betätigung des Drehknopfes 17 zu bewegen. Diese Notbetätigung 9 umfasst ein schaltbares Getriebe 67. Durch Herausziehen des Drehknopfes 17 wird der Drehknopf über das schaltbare Getriebe 67 mit der Zahnstange verbunden.. Anschließend resultiert aus einer Drehbewegung des Drehknopfes 17 eine Drehbewegung des Zahnrades 68, dass mit der Zahnstange 29 in Eingriff steht. Mit der Bewegung der Zahnstange geht eine Verschiebung der Linse einher.

Anhand von Figur 7 wird nochmals die Funktion des Kippschalters 13, der mit einer vorteilhaften Sensorik versehen ist, beschrieben. Der Kippschalter wird in einer definierten Ruheposition, vorzugsweise in der Mittelposition, gehalten. Bei einer Auslenkung des Bedienknopfes nach links bzw. rechts wird die Sensorscheibe 44 entsprechend mitgedreht. Damit wird diese Sensorscheibe 44 gegenüber einer Indikatorscheibe 46 verdreht. Durch diese Indikatorscheibe 46 wird ein Signal generiert, dass der Auslenkung des Kippschalters 13 entspricht. Dieses Signal dient als Steuerpegel für eine in der Steuereinrichtung enthaltene Motorsteuerung. Demnach bewegt sich der Motor vorwärts oder rückwärts mit einer, dem Steuerpegel zugeordneten Geschwindigkeit. Das bedeutet je größer die Auslenkung am Kippschalter ist, desto größer ist die Drehzahl des Motors in der entsprechenden Richtung. Wird der Kippschalter 13 losgelassen, so kehrt er wieder in definierte Ausgangsposition zurück. In dieser Ausgangsstellung, Auslenkung gleich 0 und Steuerpegel gleich 0, steht der Motor still. Hat eine Betätigung über einen vorbestimmten Zeitraum nicht stattgefunden, so wird der Motor vorzugsweise abgeschaltet und wird erst mit der nächsten Betätigung wieder in eine Bereitschaftsstellung gebracht.

Anstelle der zuvor näher beschriebenen Sensorik könnte zur Umsetzung der Auslenkung in ein entsprechendes Signal beispielsweise auch ein Potentiometer dienen. Alternativ ist auch der Einsatz von anderen Sensoren, zum Beispiel Reed-Kontakte, Hallsensoren, optische Sensoren und andere denkbar und möglich. Eine Richtungsumschaltung kann auch durch das Bedienelement, zum Beispiel bei einem vorgesehenen Druckelement durch zweimalige kurzweilige aufeinanderfolgende Betätigung vollzogen werden. Die Motorsteuerung ist in Figur 7 in Form einer Platine 40 ausgebildet.

In Fig. 8 ist eine besonders vorteilhafte Abhängigkeit von Auslenkung zu resultierender Antiebsgeschwindigkeit der beweglichen Linse 31 dargestellt. In den Bereich von geringen Auslenkungen des Drehknopfes 11 bis ca. 10° geht eine geringe Steigerung der Antriebsgeschwindigkeit einher. Dadurch kann bei geringen Antriebsgeschwindigkeiten diese sehr feinfühlig gewählt werden. Bei hohen Antriebsgeschwindigkeiten, wo schnell eine Antriebsgeschwindigkeit wünschenswert ist, kann mit geringen Steigerungen der Auslenkung ein großer Effekt in der Antriebsgeschwindigkeit der verschiebbar gelagerten Linse erreicht werden.

In Figur 4 und 5 ist eine weitere Ausführungsform einer Antriebseinheit für eine entlang der optischen Achse verschiebbar gelagerten Linse dargestellt. Auch diese Antriebseinheit 10 umfasst einen motorischen Antrieb 20 und eine Notbetätigung 18 zum Antrieb der entlang der optischen Achse verschiebbar gelagerten Linse, insbesondere der Fokussierlinse bzw. Fokussierlinsegruppe. Zum Umschalten von einem motorischen Antrieb auf einen Antrieb mittels der Notbetätigung ist ein Schaltgetriebe vorgesehen. Dieses Schaltgetriebe 58 umfasst ein Winkelelement 59 mit zwei Schenkeln 60. Dieses Winkelelement 59 ist um eine senkrecht, auf der durch die Schenkel aufgespannten Ebene stehenden Drehachse, drehbar gelagert. Dabei bleibt bei einer Drehbewegung des Winkelelementes 59 der zwischen den beiden Schenkeln bestehende Winkel unverändert erhalten. Mit dem einen Schenkel 60a ist der Motor 19 fest verbunden. Die Abtriebswelle des Motors 19 weist ein Zahnrad 55 auf.

Mit der Fassung 33, die radial fest, jedoch axial verschiebbar im Tubus 35 gelagert ist, ist eine Spindel drehfest verbunden. Auf dieser Spindel ist eine Klauenmutter 65 drehbar, jedoch axial fest in bezug auf das Gehäuse 6 des Spektivs gelagert. Für diese Lagerung ist ein Kugellager 63 vorgesehen. Diese Klauenmutter 65 trägt ein Doppelzahnrad 57, wobei das eine Zahnrad einen großen Durchmesser 57a und das andere Zahnrad einen kleinen Durchmesser 57b aufweist. Ist der motorische Antrieb 20 aktiviert, so befindet sich das Zahnrad 55 des motorischen Antriebs, hier des Elektromotors mit dem Doppelzahnrad 57a mit großem Durchmesser in Eingriff. Gemäß der Darstellung Figur 4, ist das Ritzel 55 gerade außer Eingriff mit dem Doppelzahnrad mit großem Durchmesser 57a. In Figur 4 ist die Schaltstellung gezeigt, bei der eine axiale Verschiebung entlang der optischen Achse der Linse 31 mittels der Notbetätigung 18 möglich ist.

Im folgenden wird auf den Antrieb der Linse 31 mittels der Notbetätigung näher eingegangen. Mit dem Drehknopf 17 ist ein Zahnrad einer Zahnradpaarung 61 fest verbunden. Dieses Zahnrad steht mit dem zweiten Zahnrad der Zahnradpaarung 61, das am Schenkel 60 b drehbar gelagert ist, in Eingriff. Dieses zweite Zahnrad auf dem Schenkel 60 b drehbar gelagerte Zahnrad steht wiederum mit dem Zahnrad 57b des Doppelzahnrades in Eingriff, wie in Figur 4 dargestellt. Durch Schwenken des Winkelelementes wie mit Pfeil 64 angedeutet, kann zwischen aktivem motorischen Antrieb und Notbetätigung geschaltet werden. Das Winkelelement 59 ist fest mit der Drehachse verbunden. Die Drehachse ist im Gehäuse drehbar gelagert und ist nicht axial verschiebbar. Mit dieser Drehachse ist ein Bedienelement ( Kippschalter 13) fest verbunden. Mit diesem Bedienelement kann der Benutzer die Drehachse verdrehen und so den Winkelhebel ( Winkelelement 59) um die Drehachse schwenken. Es ist denkbar, dass in den beiden Eingriffstellungen der Winkelhebel definiert gehalten wird. Beispielsweise durch eine Feder oder durch ein anderes Kippsprungwerk, wie bereits aus der Literatur, beispielsweise aus "Konstruktionselemente der Feinmechanik" von Werner Krause, 2. Auflage, Kapitel 12.3.2, erschienen im Hansa Verlag, bekannt.

Anstelle der in den dargestellten Ausführungsbeispielen verwendeten Drehelementen für die Betätigung von Notbetätigung und motorischem Antrieb könnte auch ein Schiebeelement, bei dem in Abhängigkeit von der vorgenommenen Auslenkung der motorische Antrieb angesteuert wird bzw. bei einer Notbetätigung diese Schiebebewegung der Bewegung der Linse 31 entspricht . Eine derartige Notbetätigung könnte auch noch mit einem Übersetzungsgetriebe versehen sein, so dass mittels der Notbetätigung auch eine feinfühlige Verschiebung der Linse 31 möglich ist.
Weiterhin ist auch die Verwendung von Druckschaltern und Tastschaltern möglich.

### Bezugszeichenliste

- 1: Fernglas
- 3: Okular
- 4: Objektiv
- 5: vorderes Gehäuseteil
- 6: mittleres Gehäuseteil
- 7: Stativbefestigung
- 9: Notbetätigung
- 10: Antriebseinheit
- 11: Bedienelement
- 13: Kippschalter
- 15: Griffmulden
- 17: Drehknopf
- 18: Notbetätigung/manueller Antrie
- 19: Motor
- 20: motorischer Antrieb
- 21: Getriebestufe
- 22: Getriebe
- 23: Zahnriemen
- 25: Ritzel
- 26: Gewindestab
- 27: Spindel
- 28: Mutter
- 29: Zahnstange
- 31: verschiebbare Linse
- 32: optische Achse
- 33: Fassung
- 35: Tubus
- 37: Axialführung
- 39: Steuereinrichtung
- 40: Steuerplatine
- 41: Batterie/Akkus
- 44: Sensorscheibe
- 45: Sensor
- 46: Indikatorscheibe
- 47: Schrittmotor
- 48: Mutter
- 49: Kupplung
- 51: Schaltelement
- 55: Zahnrad
- 57: Doppelzahnrad
- 59: Winkelelement
- 60: Schenkel
- 61: Zahnradpaarung
- 63: Kugellager
- 65: Klauenmutter mit Doppelzahnrad
- 67: schaltbares Getriebe
- 68: Zahnrad
- 69: Linearantrieb
- 71: Läufer
- 73: Läuferführung
- 75: Elektromagnet
- 77: Stator
- 79: Dauermagnet
- 81: Magnetfeld
- 83: Sensor

## Patentansprüche

1. Fernglas mit einer durch die optischen Elemente des Fernglases festgelegten optischen Achse und mindestens einer entlang der optischen Achse verschiebbar gelagerten Linse, **dadurch gekennzeichnet, dass** ein motorischer Antrieb (20) für den Antrieb der mindestens einen verschiebbar gelagerten Linse( 31) vorgesehen ist.

2. Fernglas nach Anspruch 1, **dadurch gekennzeichnet, dass** dem motorischen Antrieb (20) ein Bedienelement (11) zugeordnet ist.

3. Fernglas nach Anspruch 2, **dadurch gekennzeichnet, dass** das Bedienelement (11) ein in zwei Richtungen, ausgehend von einer Ruheposition, auslenkbares Bedienelement (13) ist.

4. Fernglas nach Anspruch 2 oder 3, **dadurch gekennzeichnet, dass** das Bedienelement (11) mehrere diskrete Betätigungsstellungen aufweist.

5. Fernglas mindestens nach Anspruch 2, **dadurch gekennzeichnet, dass** das Bedienelement (11) eine stufenlose Betätigung bis zu einer maximalen Auslenkung vorsieht.

6. Fernglas mindestens nach einem der vorangegangenen Ansprüche, **dadurch gekennzeichnet, dass** der motorische Antrieb (20) einen mit unterschiedlichen Antriebsgeschwindigkeiten betreibbaren Motor (19) umfasst.

7. Fernglas mindestens nach Anspruch 2, **dadurch gekennzeichnet, dass** das Betätigungselement (11) mit einem Sensor zur Aufnahme der Betätigungsstellung versehen ist.

8. Fernglas nach Anspruch 1, **dadurch gekennzeichnet, dass** eine Steuereinrichtung (39) zur Steuerung der Geschwindigkeit und Richtung des motorischen Antriebes (20) bzw. des Motors (19) vorgesehen ist.

9. Fernglas mindestens nach Anspruch 2, **dadurch gekennzeichnet, dass** als Bedienelement (11) ein Kippschalter (13) vorgesehen ist.

10. Fernglas mindestens nach Anspruch 1, **dadurch gekennzeichnet, dass** die verschiebbare Linse (31) die Fokussierlinse ist.

11. Fernglas nach Anspruch 10, **dadurch gekennzeichnet, dass** die Fokussierlinse zwischen Okular (3) und Objektiv (5) angeordnet ist.

12. Fernglas nach mindestens einem der vorangegangenen Ansprüche, **dadurch gekennzeichnet, dass** eine für eine Einstellung der Vergrößerung des Fernglases vorgesehene Linse mittels des motorischen Antriebs (20) antreibbar ist.

13. Fernglas nach mindestens einem der vorangegangenen Ansprüche, **dadurch gekennzeichnet, dass** der motorische Antrieb (19) mittels eines Umschaltelementes wahlweise mit der für die Vergrößerungseinstellung verschiebbaren Linse oder mit der Fokussierlinse gekoppelt werden kann.

14. Fernglas nach Anspruch 1, **dadurch gekennzeichnet, dass** zum Antrieb der verschiebbaren Linse (31) zusätzlich ein manueller Antrieb (18), auch mit Notbetätigung bezeichnet, vorgesehen ist.

15. Fernglas nach mindestens einem der vorangegangenen Ansprüche, **dadurch gekennzeichnet, dass** zum wahlweise Antrieb der verschiebbaren Linse (31) mittels des motorischen Antriebes (20) oder mittels des manuellen Antriebes (18) eine Kupplung (49) vorgesehen ist.

16. Fernglas mindestens nach Anspruch 2, **dadurch gekennzeichnet, dass** in bezug auf eine gewählte Betätigung des Bedienelementes (11) die Antriebsrichtung des motorischen Antriebes (20) festgelegt werden kann.

17. Fernglas mindestens nach Anspruch 1, **dadurch gekennzeichnet, dass** der Motor (19) ein Linearantrieb (69) ist.

18. Fernglas nach mindestens Anspruch 2, **dadurch gekennzeichnet, dass** die Antriebsgeschwindigkeit des motorischen Antriebes (20) im Verhältnis zur Auslenkung aus der Ruheposition mindestens quadratisch, vorzugsweise exponentiell zunimmt.

19. Fernglas nach Anspruch 18, **dadurch gekennzeichnet, dass** eine Maximalgeschwindigkeit vorgegeben ist.

20. Fernglas mindestens nach Anspruch 8, **dadurch gekennzeichnet, dass** die verschiebbare Linse (31) zwischen zwei vorbestimmten Endpositionen verschiebbar ist und die Geschwindigkeit des motorischen Antriebes in Abhängigkeit von der Position der verschiebbaren Linse (31) gesteuert wird.

21. Fernglas nach Anspruch 20, **dadurch gekennzeichnet, dass** die Antriebsgeschwindigkeit in einem vorbestimmten Abstand vor Erreichen der Endposition bei einer einen Schwellwert überschreitenden Antriebsgeschwindigkeit gedrosselt wird.
